# EUROPEAN PATENT APPLICATION

(11) **EP 4 762 934 A1**
(43) Date of publication of application: **24.06.2026**
(21) Application number: 24856580.6
(22) Date of filing: 26.04.2024
(51) Int. Cl.: A23B 2/00, A23P 30/00

(54) **CART TREATMENT MODULE**

(30) Priority: 21.08.2023 KR 20230109024
(71) Applicant: CJ Cheiljedang Corporation, Seoul 04560 (KR)
(72) Inventor: CHOI, Chun Myung, Seoul 04560 (KR); LEE, Seung Hoon, Seoul 04560 (KR); LEE, Seung Ho, Seoul 04560 (KR)
(74) Representative: Meissner Bolte Partnerschaft mbB
(86) International application number: PCT/KR2024/005688
(87) International publication number: WO 2025/041960

(57) **Abstract**

Provided is a cart processing module. The cart processing module includes a rotation frame including a body opened along a forward/rearward direction, and a wheel part disposed along a circumference of the body when viewed along the forward/rearward direction, a wheel rotation part engaged with the wheel part to rotate the wheel part, and a support part including a support unit that supports the rotation frame, and the support unit includes a base part, and a support roller part rotatably coupled to the base part while the forward/rearward direction is taken as an axial direction thereof, and that supports the rotation frame rotated while the forward/rearward direction is taken as an axial direction thereof from a lower side.

## Description

### [Technical Field]

### CROSS-REFERENCE TO RELATED APPLICATION

This application claims priority to Korean Patent Application No. 10-2023-0109024, filed on August 21, 2023, and all contents disclosed in the specification and drawings of the above application are incorporated herein by reference.

### [Technical Field]

The present disclosure relates to a module capable of rotating a cart when processing the cart, particularly when processing products loaded on the cart by sterilization or the like.

### [Background Art]

Retort food refers to food that is formed by a method, in which a sealed food product is sterilized by applying high-temperature heat and is then rapidly cooled. A retort sterilizer is a device that performs an operation of applying high-temperature heat to a sealed product during a manufacturing process of the retort food.

To uniformly and effectively sterilize products and process a large number of products in a short time to increase product production efficiency, various methods have been applied.

A batch method, in which products are loaded on a cart and are introduced into a sterilizer so that all processing operations including sterilization are performed at once, may be used. In this case, thermal efficiency is low, so that additional heat treatment time is required, and a deviation in heat distribution occurs, so that uniform heating is not achieved.

A continuous method, in which products are continuously transferred and each product is processed one by one in a separate space, may be used. In this case, a length of an entire apparatus becomes excessively long, and entry of an operator becomes difficult due to a complex structure, so that maintenance and repair are difficult.

In addition, systems that have emerged to compensate for disadvantages of the continuous method and the batch method have existed, but, for safety, an entire system for sterilization needs to be designed in accordance with a pressure vessel. In particular, in some countries, an entire system for sterilization is treated in the same manner as a pressure vessel, and distribution is allowed only when the system satisfies design conditions equivalent to those of a pressure vessel. Therefore, even when disadvantages of the continuous method and the batch method are compensated for, modification of the system needs to be performed within a structure, in which airtightness between respective components can be sufficiently maintained, so that design conditions equivalent to those of a pressure vessel can be satisfied.

Furthermore, a module for sterilizing the cart should be capable of providing not only a high-temperature sterilization process or a temperature-increasing process, but also a low-temperature and low-pressure environment in order to cope with impacts caused by a temperature difference and a pressure difference with the outside when the cart enters and exits. Accordingly, the cart processing module should be able to withstand a wide range of pressure and temperature, and in a module that processes the cart while rotating the cart, when temperature or pressure changes over a large range, positions of internal components may be changed due to thermal expansion or contraction, and a rotation axis may be misaligned, so that proper operation may not be achieved.

### [Disclosure]

### [Technical Problem]

An aspect of the present disclosure provides a cart processing module that may be smoothly operated even under a wide pressure range.

### [Technical Solution]

According to an aspect of the present disclosure, a cart processing module includes a rotation frame including a body opened along a forward/rearward direction, and a wheel part disposed along a circumference of the body when viewed along the forward/rearward direction, a wheel rotation part engaged with the wheel part to rotate the wheel part, and a support part including a support unit that supports the rotation frame, and the support unit includes a base part, and a support roller part rotatably coupled to the base part while the forward/rearward direction is taken as an axial direction thereof, and that supports the rotation frame rotated while the forward/rearward direction is taken as an axial direction thereof from a lower side.

### [ Advantageous Effects]

Accordingly, the cart processing module can smoothly operate even under a wide pressure range.

### [ Description of Drawings]

FIG. 1 is a perspective view of a cart processing system according to an embodiment of the present disclosure.
FIG. 2 is a perspective view illustrating a state, in which a pre-processing door of the cart processing system of FIG. 1 deviates from the system inlet, and the system inlet is opened.
FIG. 3 is a perspective view illustrating a state, in which an intermediate module of the cart processing system according to an embodiment of the present disclosure is separated from a pre-processing module and a post-processing module.
FIG. 4 is a perspective view illustrating a cart processing module, from which a module housing is removed, and a cart, according to an embodiment of the present disclosure.
FIG. 5 is a view illustrating a cart processing module, from which a module housing is removed, when viewed along a leftward/rightward direction, according to an embodiment of the present disclosure.
FIG. 6 is a view illustrating a cart processing module, from which a rotation housing is removed, according to an embodiment of the present disclosure, when viewed from a front side.
FIG. 7 is a perspective view illustrating a support unit according to an embodiment of the present disclosure.
FIG. 8 is a perspective view illustrating a state in which a support unit supports a rotation frame, according to an embodiment of the present disclosure.
FIG. 9 is an exploded perspective view illustrating a support unit according to an embodiment of the present disclosure.
FIG. 10 is a view illustrating an internal structure of a support unit and a state, in which a roller platform is rotated, according to an embodiment of the present disclosure.
FIG. 11 is a view illustrating a support frame and a wheel rotation part, according to an embodiment of the present disclosure.
FIG. 12 is a view illustrating, in detail, a state in which a support frame and a wheel rotation part are engaged with each other, according to an embodiment of the present disclosure.
FIG. 13 is a perspective view illustrating a state, in which a cart is rotated while being fixed by a fixing means, according to an embodiment of the present disclosure.
FIG. 14 is a view conceptually illustrating a state, in which a module housing of a cart processing module is moved, according to an embodiment of the present disclosure.
FIG. 15 is a view conceptually illustrating a state in which a gear tooth of a cart processing module is moved by a pressure change, according to an embodiment of the present disclosure.

### [ Mode for Invention]

Hereinafter, some embodiments of the present disclosure will be described in detail with reference to the accompanying drawings. It should be noted that, in assigning reference numerals to components of the respective drawings, the same components are given the same reference numerals as much as possible, even when they are illustrated in different drawings. In describing embodiments of the present disclosure, detailed descriptions associated with well-known functions or configurations will be omitted if they may make subject matters of the present disclosure unnecessarily obscure.

Furthermore, in describing components of embodiments of the present disclosure, the terms first, second, A, B, (a), (b), and the like may be used herein. These terms are only used to distinguish one component from another component, but do not limit the corresponding components irrespective of the nature, order, or priority of the corresponding components. When it is described that a certain component is "connected to", "coupled to" or "electrically connected to" a second component, it should be understood that the component may be directly connected or electrically connected to the second component, but a third component may be "connected", "coupled" or "electrically connected" between the components.

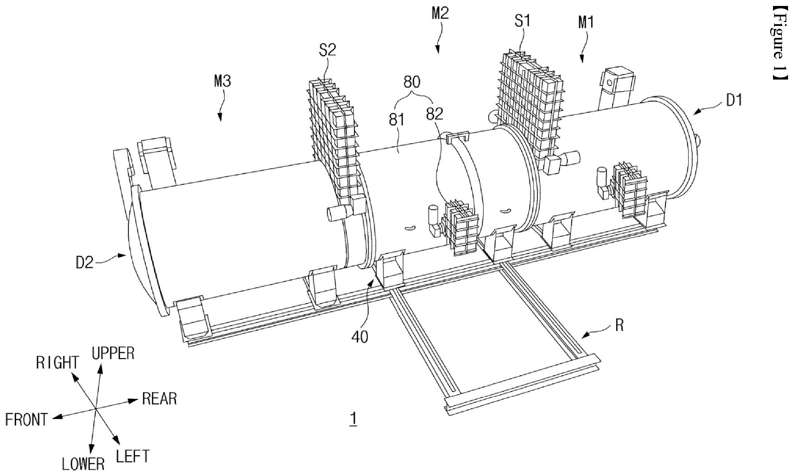

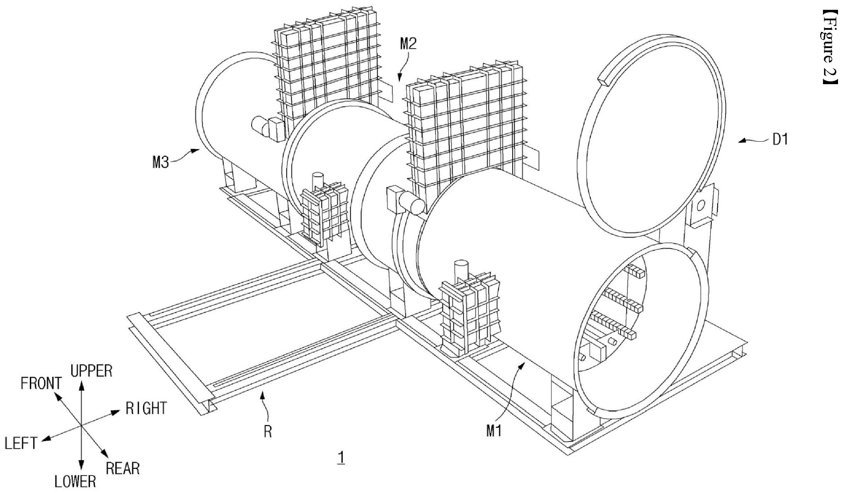

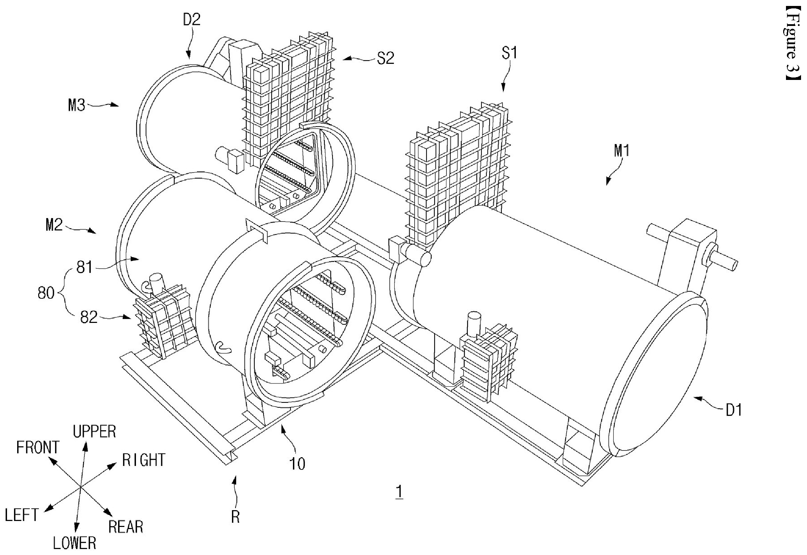

FIG. 1 is a perspective view of a cart processing system 1 according to an embodiment of the present disclosure. FIG. 2 is a perspective view illustrating a state, in which a pre-processing door D1 of the cart processing system 1 of FIG. 1 deviates from the system inlet, and the system inlet is opened. FIG. 3 is a perspective view illustrating a state, in which an intermediate module M2 of a cart processing system 1 according to an embodiment of the present disclosure is separated from a pre-processing module M1 and a post-processing module M3.

Referring to the drawings, the cart processing system 1 according to an embodiment of the present disclosure may include the pre-processing module M1, the intermediate module M2, and the post-processing module M3. The intermediate module M2 is configured to receive and process a cart C that has been processed in the pre-processing module M1. The post-processing module M3 is configured to receive and process a cart C that has been processed in the intermediate module M2. Each module is a module that processes a product loaded on the cart C, for example, through a heat treatment, and thus, may be referred to as a cart processing module. Accordingly, the pre-processing module M1, the intermediate module M2, and the post-processing module M3 may be referred to as cart processing modules. However, the processing of the cart C and products loaded on the cart C by each cart processing module may not be limited to a heat treatment.

In the specification, a leftward direction, a rightward direction, and an upward/downward direction mean directions that are perpendicular to a forward/rearward direction. The directions are used for convenience of description, and may be relative depending on an arrangement direction and an orientation of the cart processing system 1. Furthermore, hereinafter, the cart processing module will be described by using the intermediate module M2, and a description of the cart processing module may also be applied to the pre-processing module M1 and the post-processing module M3.

The modules that constitute the cart processing system 1 of the present disclosure may be arranged along the forward/rearward direction. The pre-processing module M1, the intermediate module M2, and the post-processing module M3 may be arranged sequentially in a forward direction. The cart C may move along a forward direction within the cart processing system 1. A cart C processed in the pre-processing module M1 may be moved forward to be transferred to the intermediate module M2 to be processed, and a cart C processed in the intermediate module M2 may be moved forward to be transferred to the post-processing module M3 to be processed.

The modules may be separated from or coupled to each other. The intermediate module M2 may be configured to be positioned in any one of a coupling state, in which it is coupled to the pre-processing module M1 and the post-processing module M3, and a separation state, in which it is separated from the pre-processing module M1 and the post-processing module M3. When the intermediate module M2 is transitioned from the coupling state to the separation state, it may deviate from the pre-processing module M1 and the post-processing module M3 along a direction that crosses the forward/rearward direction. Conversely, when the intermediate module M2 is transitioned from the separation state to the coupling state, it may approach the pre-processing module M1 and the post-processing module M3 along a direction that crosses the forward/rearward direction. In an embodiment of the present disclosure, a direction, in which the intermediate module M2 deviates from the pre-processing module M1 and the post-processing module M3 when the intermediate module M2 is transitioned to the separation state, is referred to as a leftward direction, and a direction, in which the intermediate module M2 moves when the intermediate module M2 is transitioned to the coupling state, is referred to as a rightward direction, but the directions are not limited thereto.

The cart processing system 1 according to an embodiment of the present disclosure may include a module moving apparatus. The module moving apparatus is coupled to the intermediate module M2 to move the intermediate module M2 such that the intermediate module M2 is in any one of a coupling state and a separation state. The module moving apparatus may include a movement rail R, to which the intermediate module M2 is slidably coupled. The movement rail R may extend along a leftward/rightward direction and may be disposed on the ground. The intermediate module M2 may include a support part 40 that extends downward from an intermediate body 11 to be slid along the movement rail R, and the support part 40 may be slidably coupled to the movement rail R. The module moving apparatus may include a fixed rail that is coupled to other modules so that the other modules are disposed at specific positions and that extends along the forward/rearward direction. The movement rail R may be disposed to cross the fixed rail. The pre-processing module M1 and the post-processing module M3 may also have a support part 40 similar to the intermediate module M2, and a lower end of the support part 40 may be coupled to the fixed rail or positioned on the ground to support the pre-processing module M1 and the post-processing module M3, respectively.

A towing ring, to which a winch or a hoist may be hooked, may be formed on an outer surface of the intermediate body 11. When a winch or a hoist is hooked to the towing ring and pulled along a leftward/rightward direction, the intermediate module M2 may be moved along the movement rail R to be separated from or coupled to the pre-processing module M1 and the post-processing module M3.

In addition, the module moving apparatus may include a power source that drives an intermediate roller, so that the intermediate module M2 may move leftward and rightward along the movement rail R.

As described above, each cart processing module may be selectively separated from or coupled to form an integrated system that enables step-by-step processing of a cart C moving along a forward direction, whereby maintenance and repair of the cart processing system 1 may be facilitated, and, when major maintenance is required, a necessary cart processing module may be separated for replacement or repair.

Furthermore, even when a failure of equipment occurs in a specific cart processing module and causes an abnormality in a product, a problem occurs only in the corresponding cart processing module and the product located in the corresponding cart processing module, so that a disposal amount of products may be minimized.

At a rear end of the pre-processing body 11 of the pre-processing module M1, a system inlet that is opened along a forward/rearward direction may be formed. A cart C may be moved forward through the system inlet to enter an interior of the cart processing system 1 from an outside. The cart processing system 1 according to an embodiment of the present disclosure may include a pre-processing door D1. The pre-processing door D1 is a device that opens or closes the system inlet as the pre-processing door D1 is moved.

A system outlet that is opened along the forward/rearward direction may be formed at a front end of a post-processing body 11 of the post-processing module M3. The cart C may be moved forward through the system outlet to be discharged from the interior of the cart processing system 1 to the outside. The cart processing system 1 according to an embodiment of the present disclosure may include a post-processing door D2. The post-processing door D2 is a device that opens or closes the system outlet as the post-processing door D2 is moved.

Due to the pre-processing door D1 and the post-processing door D2, the cart processing system 1 may define an interior space that is closed overall, and the interior space may be distinguished from the outside by the pre-processing door D1, the post-processing door D2, and the modules.

The cart processing module may include a module housing 80. The module housing 80 may be defined as surrounding a pre-processing space that is an interior space, through which the cart C passes to be processed. A rotation frame 10, a wheel rotation part 20, and a driving part 30, which will be described later, may be located in the pre-processing space. That is, the above components may be embedded in the module housing 80. The module housing 80 may physically separate a space located therein from an outside space. The module housing 80 may be formed in a cylindrical shape that is opened along the forward/rearward direction, but a shape thereof is not limited thereto.

The module housing 80 may include a main housing 81 and a rotation housing 82. The rotation frame 10 may be located in the main housing 81, and the wheel rotation part 20 and the driving part 30 may be located in the rotation housing 82. The rotation housing 82 may have a shape that protrudes from a cylindrical portion of the main housing 81.

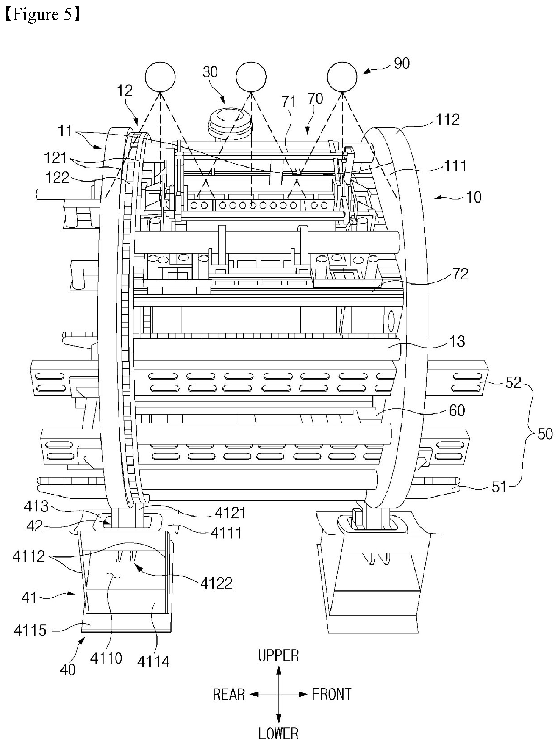

The cart processing module may include a thermal medium providing part 90 that is formed toward an interior of the cart processing module for a heat treatment of the cart C. The thermal medium may be steam, hot water, or a refrigerant, such as steam, hot water, or a refrigerant, and the thermal medium providing part 90 may include a pump and a nozzle for pumping the thermal medium. The thermal medium providing part 90 may be located in an interior of the main housing 81. The thermal medium providing part 90 may be coupled to and fixed to an inner surface of the main housing 81. Accordingly, the thermal medium providing part 90 may provide the thermal medium not only to the cart C, but also to the rotation frame 10. In FIG. 5, a plurality of nozzles included in the thermal medium providing part 90 are conceptually illustrated as being disposed to be spaced apart from each other along the forward/rearward direction above the rotation frame 10, and as spraying the thermal medium toward an interior of the rotation frame 10, in which the cart C may be located, however, in addition thereto, the nozzles may be disposed to surround the rotation frame 10 from various directions, such as upper and lower sides and left and right sides, when viewed along the forward/rearward direction, while being spaced apart from the rotation frame 10. The nozzle may be a spray nozzle that is capable of spraying a fluid, may be a pin-hole-type nozzle, in which holes are formed in a cylinder to allow the fluid to flow therethrough, or may be a nozzle that is capable of strongly jetting the fluid, however, a type of the nozzle is not limited thereto.

The cart processing module may further include another medium providing device that provides a disinfectant in a sprayed form for a disinfection treatment, or provides a detergent or washing water in a sprayed form for an internal cleaning.

The cart processing system 1 according to an embodiment of the present disclosure may include a pre-processing shutter S1 and a post-processing shutter S2. The pre-processing shutter S1 selectively divides an interior space of the pre-processing body 11 along the forward/rearward direction. The post-processing shutter S2 selectively divides an interior space of the post-processing body 11 along the forward/rearward direction.

The pre-processing shutter S1 and the post-processing shutter S2 may include a plate-shaped shielding part, and a shutter housing having a pre-processing opening or a post-processing opening that is opened and closed by the shielding part. When the pre-processing opening or the post-processing opening is opened, the shielding part may be located inside the shutter housing. A portion, at which the shielding part is located when the opening is opened, may be an upper portion of the shutter housing.

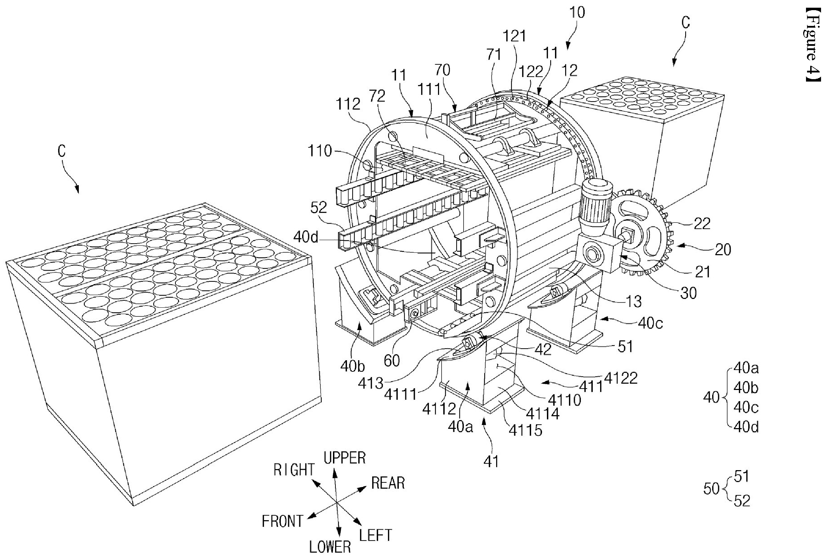

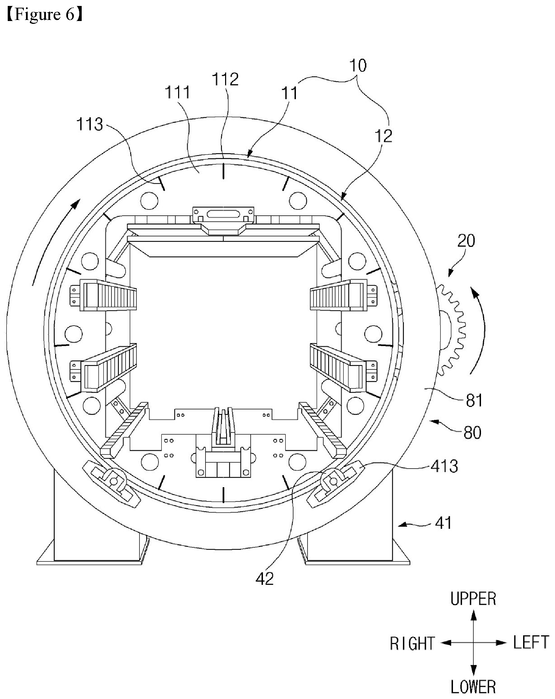

FIG. 4 is a perspective view illustrating a cart processing module, from which a module housing 80 is removed, and a cart C, according to an embodiment of the present disclosure. FIG. 5 is a view illustrating a cart processing module, from which a module housing 80 is removed, when viewed along a leftward/rightward direction, according to an embodiment of the present disclosure. FIG. 6 is a view illustrating a cart processing module according to an embodiment of the present disclosure, when viewed from a front side.

A cart processing module according to an embodiment of the present disclosure includes a rotation frame 10, a wheel rotation part 20, and a support part 40.

The rotation frame 10 is a frame having a rotation space, that is a space, into which the cart C enters, in an interior thereof. An outer appearance of the rotation frame 10 may be formed in a cylindrical shape, however, an entirety thereof does not need to have a cylindrical shape. For example, the rotation frame 10 may include a plurality of bodies 11 that are disposed to be spaced apart from each other along the forward/rearward direction, while having, at a center thereof, an opening into which the cart C is inserted, and a plurality of connection ribs 13 that connect the plurality of bodies 11 along the forward/rearward direction, and thus, may have a shape, such as a cylindrical frame.

The rotation frame 10 may include a body 11 that is opened along the forward/rearward direction, and may include a wheel part 12 that is disposed along a circumference of the body 11 when viewed along the forward/rearward direction. The body 11 may have a disk-shaped plate body 111 that is perpendicular to the forward/rearward direction, and a ring-shaped frame contact member 112 that defines an outer boundary of the plate body 111, and may further include a reinforcing rib 113 that connects the frame contact member 112 and the plate body 111 to reinforce rigidity of the rotation frame 10. The frame contact member 112 may have a shape that protrudes from a circumference of the body 11 along any one direction of the forward/rearward direction, like a plate, which is perpendicular to a radial direction of the body 11, is bent to form a ring. Referring to the drawings, the frame contact member 112 may protrude outward from the body 11 with respect to the forward/rearward direction.

With respect to the forward/rearward direction, the wheel part 12 may be coupled to an inner side of the body 11. The wheel part 12 may be directly coupled to the inner side of the body 11, or may be coupled to the body 11 through the connection rib 13. Accordingly, the cart C may also pass through a center of the wheel part 12.

The wheel part 12 may include an annular wheel frame 121. A pair of annular wheel frames 121 may be provided. The wheel part 12 may include a plurality of pins 122 that are disposed to be spaced apart from each other along a circumferential direction of the wheel frame 121, and are coupled to the wheel frame 121. The plurality of pins 122 may be disposed between a pair of wheel frames 121, and opposite ends thereof may be coupled to the wheel frames 121, respectively.

Because the wheel frame 121 may be formed in a toroidal shape, the wheel frames 121 may be disposed to be spaced apart from each other along a circumferential direction of the wheel frame 121. The plurality of pins 122 may be rotatably coupled to the wheel frame 121. The pin 122 may be coupled to the wheel frame 121 to be rotatable, while the forward/rearward direction is taken as an axial direction thereof. That is, the wheel part 12 may be formed in a pin wheel type including a plurality of spaced-apart pins 122, so that excessively strong force applied to the pins 122 by the wheel rotation part 20 may be prevented, thereby preventing damage or wear of the pins 122 and the wheel rotation part 20.

A cart processing module according to an embodiment of the present disclosure may include a driving part 30 that is configured to rotate the wheel rotation part 20 to rotate the rotation frame 10. The driving part 30 may be accommodated in the rotation housing 82 of the module housing 80, together with the wheel rotation part 20. The driving part 30 may be a device, such as a motor or an actuator, that receives power to generate a rotational force, however, a type thereof is not limited thereto.

A cart processing system 1 according to an embodiment of the present disclosure may include a transfer part 60. The transfer parts 60 of the respective modules may be disposed to be spaced apart from each other along the forward/rearward direction. The transfer part 60 may be configured as a conveyor belt that is disposed, along the forward/rearward direction, at a lower portion of an inner side of the module housing 80, and that may transfer the cart C, which is seated thereon, along the forward/rearward direction. However, another configuration, other than a conveyor belt, may also be used as the transfer part 60, as long as it is a device that is capable of moving a seated target. The transfer part 60 may be disposed adjacent to an opening of the body 11, and may be coupled to the rotation frame 10, so that the cart C is transferred along the forward/rearward direction.

A transfer assisting roller 50 may be rotatably coupled to an inner side of the body 11. Because the transfer part 60 may be disposed adjacent to the opening of the body 11, the transfer assisting roller 50 may assist transfer of the cart C by the transfer part 60. A plurality of transfer assisting rollers 50 may be disposed to be freely rotatable. The transfer assisting roller 50 may be disposed on at least one of an upper side, a lower side, a left side, and a right side of an opening of the disk-shaped member. As illustrated, the transfer assisting roller 50 may include a lower assisting roller 51 that is located on a lower side of the opening, and side assisting rollers 52 that are located on left and right sides of the opening, but the number and an arrangement thereof are not limited thereto.

A cart processing module of a cart processing system 1 according to an embodiment of the present disclosure may include a fixing means. The cart fixing means is provided to fix the cart C that has entered an interior of the rotation frame 10. The wheel rotation part 20 and the rotation frame 10 are configured to rotate the cart C that is fixed by the fixing means, relative to the module housing 80, with the forward/rearward direction as an axis. That is, a direction, in which the cart C progresses in the cart processing system 1, and an axial direction, about which the cart C is rotated by the wheel rotation part 20, may coincide. During rotation by the wheel rotation part 20, the cart fixing means serves to fix the cart C to the rotation frame 10, so that deviation of the cart C or deviation of products in the cart C does not occur.

The fixing means may include a fixing operating part 70, and a fixing driving part for operating the fixing operating part 70. The fixing operating part 70 and the fixing driving part may be spaced apart from each other or contact each other. The fixing operating part 70 may be coupled to the rotation frame 10 to be rotated together with the rotation frame 10 as the rotation frame 10 is rotated, but the fixing driving part may be coupled to the module housing 80 and may not be influenced by rotation of the rotation frame 10. When the fixing driving part operates the fixing operating part 70, the fixing driving part may contact the fixing operating part 70, and when the fixing driving part does not change a state of the fixing operating part 70 and rotation of the cart C by the rotation frame 10 occurs, the fixing driving part and the fixing operating part 70 may be spaced apart from each other.

The fixing operating part 70 may be selectively placed in any one of a fixing state and a releasing state. In a fixed state, as the fixing operating part 70 is deformed by the fixing driving part, the fixing operating part 70 presses the cart C that has entered an inside of the module housing 80, and clamps the cart C between the fixing operating part 70 and the rotation frame 10 to fix the cart C. In a releasing state, the fixing operating part 70 is separated from the cart C, so that the cart C may be moved along the forward/rearward direction and may be separated from the rotation frame 10.

The fixing driving part is configured to separably contact the fixing operating part 70 to change a state of the fixing operating part 70. That is, by an operation of the fixing driving part, the fixing operating part 70 may be changed from a fixed state to a releasing state, or from the releasing state to the fixed state.

The fixing operating part 70 according to an embodiment of the present disclosure may have a pressing plate 72 and a link structure 71. Specifically, the fixing operating part 70 may have, as the link structure 71, at least one of a four-bar link, a toggle link, or a combination thereof. The pressing plate 72 is a plate that presses the cart C downward, and in a fixed state, is lowered by operation of the link structure 71 to press the cart C, and in a releasing state, is lifted by operation of the link structure 71 to be separated from the cart C. That is, the link structure 71 may have its state changed by an operation of the fixing driving part. The pressing plate 70 may press the cart C against the rotation frame 10. While the cart C is seated on an inner surface of the rotation frame 10, the pressing plate 72 is pressed, so that the cart C is clamped and fixed between the pressing plate 72 and the inner surface of the rotation frame 10.

The link operating member included in the fixing driving part may be an air cylinder that is movable in an upward/downward direction, but any device that is capable of pressing the link structure 71 through lifting and lowering may be used as the link operating member.

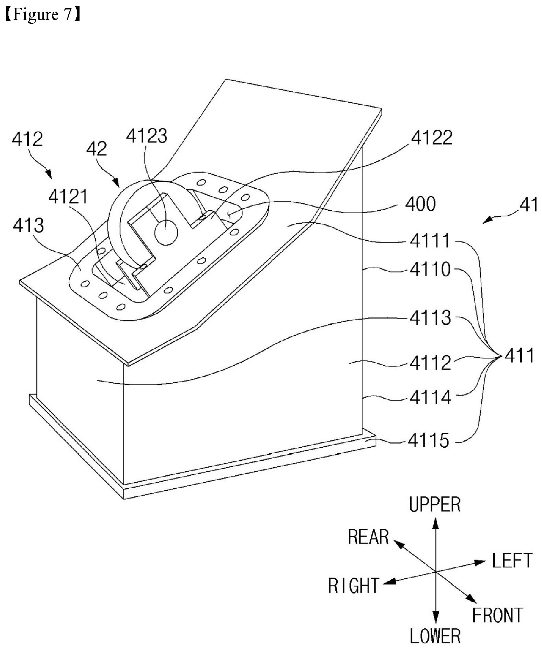

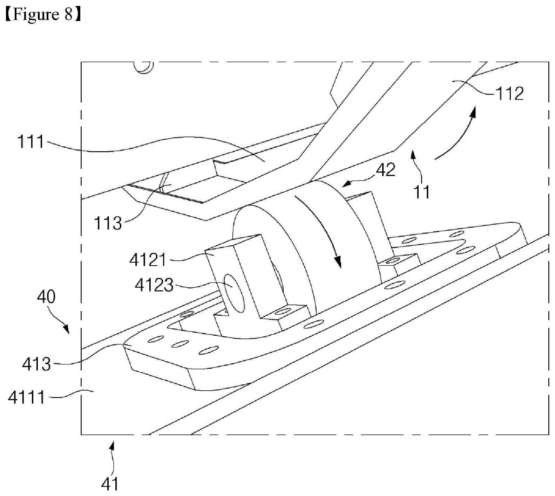

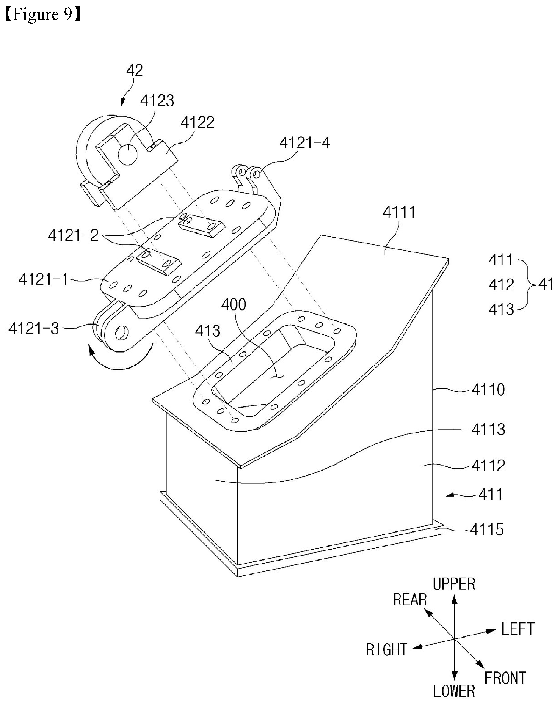

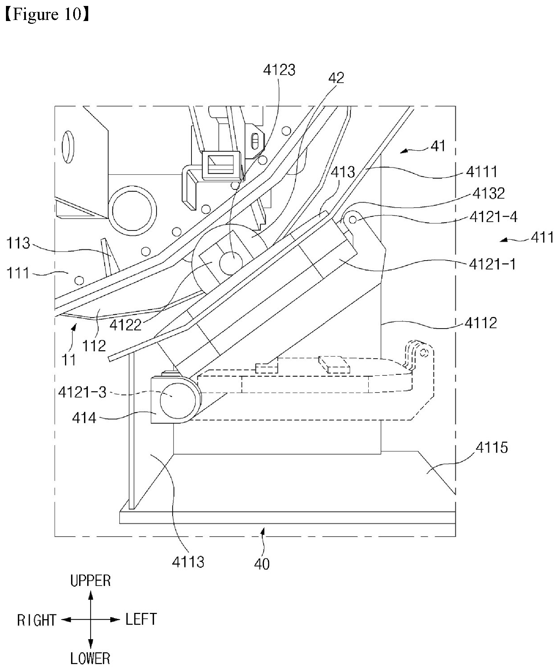

FIG. 7 is a perspective view illustrating a support unit 40a, 40b, 40c, and 40d according to an embodiment of the present disclosure. FIG. 8 is a perspective view illustrating a state in which the support units 40a, 40b, 40c, and 40d support the rotation frame 10 according to an embodiment of the present disclosure. FIG. 9 is an exploded perspective view illustrating a support unit 40a, 40b, 40c, and 40d according to an embodiment of the present disclosure. FIG. 10 is a view illustrating an internal structure of the support units 40a, 40b, 40c, and 40d, and a state in which a roller platform 412 is rotated, according to an embodiment of the present disclosure.

The support part 40 includes support units 40a, 40b, 40c, and 40d that are configured to support the rotation frame 10. A plurality of support units 40a, 40b, 40c, and 40d may be provided. The plurality of support units 40a, 40b, 40c, and 40d may be disposed to be spaced apart from each other along the forward/rearward direction or the leftward/rightward direction. In the drawings, because the support units 40a, 40b, 40c, and 40d may include a first support unit 40a, a second support unit 40b, a third support unit 40c, and a fourth support unit 40d, so that a total of four support units are disposed to be spaced apart from each other along the forward/rearward direction or the leftward/rightward direction and are disposed at respective vertices of a rectangle, and two of the support units 40a, 40b, 40c, and 40d support each of a pair of bodies 11 that are spaced apart from each other along the forward/rearward direction, however, the number and an arrangement thereof are not limited thereto.

Each of the support units 40a, 40b, 40c, and 40d includes a base part 41 and a support roller part 42. The base part 41 is a part that supports the rotation frame 10 while contacting the ground. The support roller part 42 may be rotatably coupled to the base part 41 while the forward/rearward direction is taken as an axial direction thereof, and supports the rotation frame 10, which is rotated while the forward/rearward direction is taken as an axial direction, from a lower side. The support roller part 42 may contact the frame contact member 112 of the rotation frame 10, and may support rotation of the rotation frame 10. When the rotation frame 10 is rotated, the support roller part 42 may also be rotated. The support roller parts 42 of the plurality of support units 40a, 40b, 40c, and 40d support the rotation frame 10 at different positions, so that, even when a pressure change occurs greatly in an interior of the module housing 80, causing a position of the rotation frame 10 to change and a rotation center thereof to be shifted, rotation of the rotation frame 10 may be smoothly supported.

The base part 41 may include a base housing 411 and a roller platform 412. The base housing 411 includes a support plate 4111 having a roller opening 400, through which the support roller part 42 and the roller platform 412 pass when the roller platform 412 is rotated, and base side plates 4112, 4113, and 4114 that extend downward from the support plate 4111. The support plate 4111 may contact the module housing 80. The roller platform 412 and the support roller part 42 may pass through an opening formed in the module housing 80 to support the rotation frame 10, and the base housing 411 may contact the module housing 80 while surrounding the opening. That is, the module housing 80 and the base housing 411 may form a housing of the cart processing module as an overall pressure vessel. Because an outer surface of the module housing 80 may be formed in a cylindrical shape, the support plate 4111 may also be formed in a curved shape.

The base side plates 4112, 4113, and 4114 may include an access opening 4110. The access opening 4110 is an opening through which the support roller part 42 and the roller opening 400 may be identified from an outside. The access opening 4110 may be formed to be surrounded by the support plate 4111 and the base side plates 4112, 4113, and 4114.

The base side plates 4112, 4113, and 4114 may include a pair of front/rear side plates 4112 that are perpendicular to the forward/rearward direction and are spaced apart from each other along the forward/rearward direction, an inner plate 4113 that is perpendicular to the leftward/rightward direction and is coupled to inner sides of the front/rear side plates 4112 with respect to the leftward/rightward direction, and an outer plate 4114 that is perpendicular to the leftward/rightward direction and is coupled to outer sides of the front/rear side plates 4112 with respect to the leftward/rightward direction. An access opening 4110 may be defined as being surrounded by the outer plate 4114, the front/rear side plates 4112, and the support plate 4111. That is, the access opening 4110 may be formed on an outer side of the base housing 411 in the leftward/rightward direction, so that access by an operator from the outside may be enabled. The base housing 411 may include a lower plate 4115 that is coupled to a lower side of the base side plates 4112, 4113, and 4114.

The roller platform 412 is a portion, to which the support roller part 42 is rotatably coupled. The roller platform 412 may be rotatably coupled to the base housing 411 so that the support roller part 42 is exposed to an outside of the base housing 411 and an interior of the module housing 80 to contact the rotation frame 10, or is moved to an interior of the base housing 411 to deviate from the rotation frame 10. The roller platform 412 may allow the support roller part 42 to be rotated to support the rotation frame 10 while covering an opening formed in the module housing 80, or may allow the support roller part 42 to deviate from the rotation frame 10 while opening the opening. The roller platform 412 may be separably coupled to the base housing 411. The roller platform 412 may be rotatably coupled to the base housing 411, while the forward/rearward direction is taken as an axial direction thereof.

As the roller platform 412 is rotated, an operator may easily access the support roller part 42 through the access opening 4110 to perform an operation, without disassembling the entire cart processing module. Because the roller platform 412 is separably coupled to the base housing 411, an operator may withdraw the roller platform 412 through the access opening 4110 to replace or service the roller platform 412 depending on a situation.

As illustrated, when the roller platform 412 causes the support roller part 42 to deviate from the rotation frame 10, the roller platform 412 may be positioned in a state that is perpendicular to an upward/downward direction. Furthermore, when the roller platform 412 causes the support roller part 42 to contact the rotation frame 10, the roller platform 412 may be positioned in a state, in which it is perpendicular to a radial direction of the rotation frame 10.

More specifically, the roller platform 412 may include a platform base 4121, a roller connecting leg 4122 that is coupled to an upper surface of the platform base 4121, and a shaft 4123 that rotatably couples the roller connecting leg 4122 and the support roller part 42. A platform coupling member 414 may be formed on an inner surface of the base housing 411. A platform base 4121 may be rotatably coupled to the platform coupling member 414. The platform base 4121 may include a platform cover 4121-1 that is capable of contacting a circumferential member 413 to be described later, and a platform hinge 4121-3 that is located on an inner side of the platform cover 4121-1 in the leftward/rightward direction and is rotatably coupled to the platform coupling member 414 by a hinge or the like.

The platform base 4121 may include a base fixing projection 4121-4 that is separably coupled to a fixing projection 4132 that protrudes from the circumferential member 413. The base fixing projection 4121-4 may be located on an outer side of the platform cover 4121-1 in the leftward/rightward direction, so that, when coupled to the circumferential member 413, the platform base 4121 is prevented from rotating, and when not coupled thereto, the platform base 4121 is allowed to rotate. The fixing projection 4132 may protrude from an outer side of the circumferential member 413 in the leftward/rightward direction.

A protruding step 4121-2 may be formed on an upper surface of the platform cover 4121-1. A roller connecting leg 4122 may be coupled to the protruding step 4121-2. A pair of roller connecting legs 4122 may be provided to be spaced apart from each other in the forward/rearward direction, and may support the support roller part 42 on opposite sides in the forward/rearward direction. The shaft 4123 may pass through the support roller part 42 in the forward/rearward direction, and may be coupled to the pair of roller connecting legs 4122. The support roller part 42 may be rotatably coupled to the shaft 4123, but the support roller part 42 and the shaft 4123 may also be rotatably coupled together to the roller connecting legs 4122. The roller connecting leg 4122 may have a slit that is connected to a portion, to which the shaft 4123 is coupled, so as to facilitate insertion of the shaft 4123.

The base part 41 may include a circumferential member 413. The circumferential member 413 may be inserted into the roller opening 400, and may be inserted into an opening that is formed in the module housing 80. The circumferential member 413 may be formed in an annular shape such that the support roller part 42 passes through an opening in an interior thereof. The roller platform 412 may contact a lower surface of the circumferential member 413. That is, the circumferential member 413 is inserted into the opening formed in the module housing 80, and the roller platform 412 covers the opening of the circumferential member 413 like a cover, so that an airtightness of the module housing 80 may be maintained.

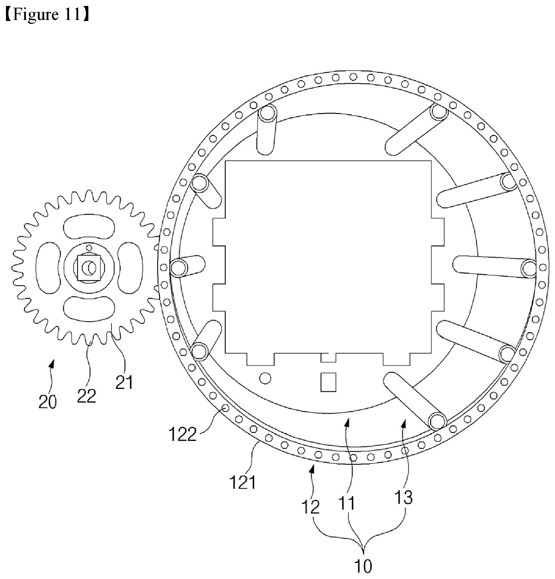

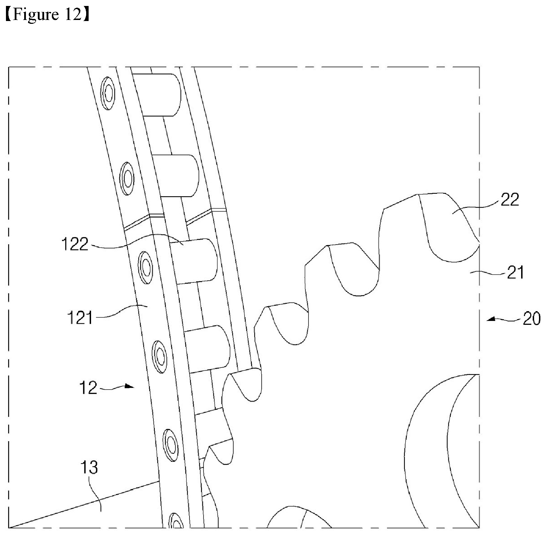

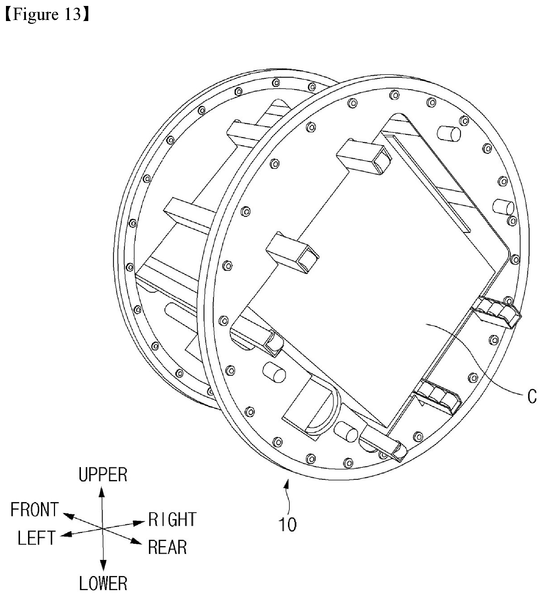

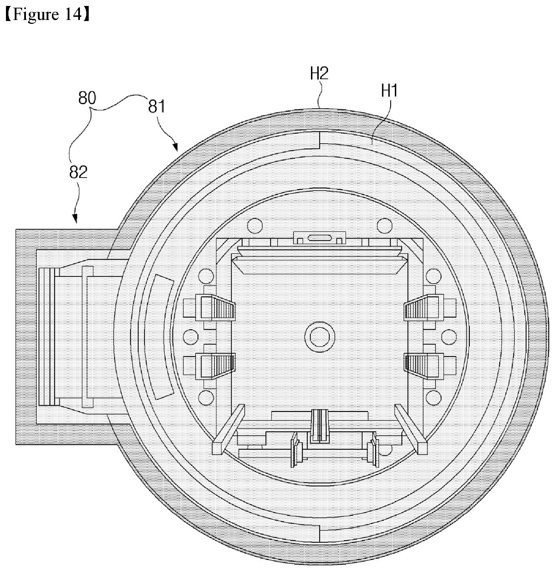

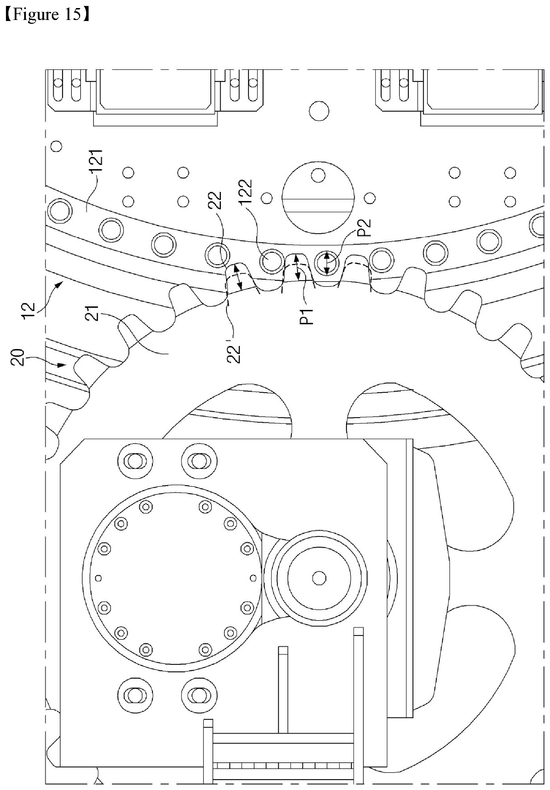

FIG. 11 is a view illustrating a support frame and a wheel rotation part 20, according to an embodiment of the present disclosure. FIG. 12 is a view illustrating, in detail, a state in which a support frame and a wheel rotation part 20 are engaged with each other, according to an embodiment of the present disclosure. FIG. 13 is a perspective view illustrating a state, in which a cart C is rotated while being fixed by a fixing means, according to an embodiment of the present disclosure. FIG. 14 is a view conceptually illustrating a state, in which a module housing 80 of a cart processing module is moved, according to an embodiment of the present disclosure. FIG. 15 is a view conceptually illustrating a state in which a gear tooth 22 and 22' of a cart processing module is moved by a pressure change, according to an embodiment of the present disclosure.

The wheel rotation part 20 is engaged with the wheel part 12. The wheel rotation part 20 is configured to rotate the wheel part 12. The wheel rotation part 20 may include a sprocket that is enmeshed with a plurality of pins 122 to rotate the wheel part 12 as it is rotated. The sprocket may include a sprocket body 21 that is rotated while the forward/rearward direction is taken as an axial direction thereof, and a plurality of gear teeth 22 that are formed along a circumference of the sprocket body 21.

In a sprocket tooth profile, a space between adjacent teeth may be formed to be larger than a space occupied by a pin 122 of the wheel part 12, so as to provide clearance. A width P1 of a sprocket gear tooth 22 may be greater than a width P2 of the pin 122. In the drawings, a boundary in a case in which the cart processing module is contracted is referred to as H1, and a boundary in a case in which the cart processing module is expanded is referred to as H2, that is, positions of a gear tooth 22' in the expanded state and a gear tooth 22 in the contracted state are illustrated as shown in FIG. 15. As described above, even when a deviation in a position of the wheel rotation part 20 occurs due to expansion and contraction of the cart processing module, because of the above-described configuration of the wheel rotation part 20 and the wheel part 12, a state in which the gear teeth 22 and 22' of the wheel rotation part 20 are engaged with the wheel part 12 may be maintained.

In the above, even though all components constituting an embodiment disclosed in the specification are described as being combined to one or operating in combination, embodiments disclosed in the specification are not necessarily limited to the embodiment. That is, within the scope of embodiments disclosed in the specification, all components may be selectively combined and may perform a function(s). In addition, the terms such as "comprise", "include", and "have" described above mean that the corresponding component may be included, unless there is a particularly contrary statement, and should be interpreted as further including another component, not excluding another component. Unless otherwise defined herein, all the terms used herein, which include technical or scientific terms, may have the same meaning that is generally understood by a person skilled in the art to which embodiments disclosed in the specification pertain. Terms commonly used, such as those defined in the dictionary, should be interpreted as having a meaning that is consistent with the meaning in the context of the related art and will not be interpreted as having an idealized or overly formal meaning unless expressly defined in in the specification.

The above description is merely an example of the technical idea of the present disclosure, and various modifications and variations may be made by one skilled in the art without departing from the essential characteristic of the present disclosure. Accordingly, embodiments of the present disclosure are intended not to limit but to explain the technical idea of the present disclosure, and the scope and spirit of the present disclosure is not limited by the above embodiments. The scope of protection of the present disclosure should be construed by the attached claims, and all equivalents thereof should be construed as being included within the scope of the present disclosure.

## Claims

1. A cart processing module comprising:
a rotation frame including a body opened along a forward/rearward direction, and a wheel part disposed along a circumference of the body when viewed along the forward/rearward direction;
a wheel rotation part engaged with the wheel part to rotate the wheel part; and
a support part including a support unit configured to support the rotation frame,
wherein the support unit includes:
a base part; and
a support roller part rotatably coupled to the base part while the forward/rearward direction is taken as an axial direction thereof, and configured to support the rotation frame rotated while the forward/rearward direction is taken as an axial direction thereof from a lower side.

2. The cart processing module of claim 1, wherein the base part includes:
a base housing; and
a roller platform rotatably coupled to the base housing, and to which the support roller part is rotatably coupled.

3. The cart processing module of claim 2, wherein the roller platform is rotatably coupled to the base housing such that the support roller part is exposed to an outside of the base housing to contact the rotation frame or is moved into an interior of the base housing to deviate from the rotation frame.

4. The cart processing module of claim 3, wherein the base housing includes:
a support plate having a roller opening, through which the support roller part and the roller platform pass when the roller platform is rotated; and
a base side plate extending downward from the support plate, and
wherein an access opening allowing the support roller part and the roller opening to be identified from an outside is surrounded by the support plate and the base side plate.

5. The cart processing module of claim 3, wherein the roller platform is rotatably coupled to the base housing while the forward/rearward direction is taken as an axial direction thereof.

6. The cart processing module of claim 2, further comprising:
a module housing, in which the rotation frame and the wheel rotation part are mounted,
wherein the base housing includes a support plate having a roller opening, through which the support roller part and the roller platform pass, and contacting the module housing.

7. The cart processing module of claim 2, wherein the roller platform is separably coupled to the base housing.

8. The cart processing module of claim 1, wherein a plurality of support units are disposed to be spaced apart from each other along the forward/rearward direction or a leftward/rightward direction.

9. The cart processing module of claim 1, wherein the wheel part includes:
an annular wheel frame; and
a plurality of pins disposed to be spaced apart from each other along a circumferential direction of the wheel frame and rotatably coupled to the wheel frame.

10. The cart processing module of claim 1, wherein the wheel part is formed in a pin wheel shape including a plurality of spaced apart pins, and
wherein the wheel rotation part includes a sprocket enmeshed with the plurality of pins.

11. The cart processing module of claim 10, wherein a width of gear teeth of the sprocket is greater than a width of the pins.
